# EUROPEAN PATENT APPLICATION

(11) **EP 1 207 712 A2**
(43) Date of publication of application: **22.05.2002**
(21) Application number: 01309586.4
(22) Date of filing: 13.11.2001
(51) Int. Cl.: H04Q 7/38

(54) **Communication system, communication method, and communication terminal apparatus**

(30) Priority: 15.11.2000 JP 2000348603
(71) Applicant: SONY CORPORATION, Tokyo (JP)
(72) Inventor: Itoh, Katsutoshi, Sony Corporation, Shinagawa-ku, Tokyo (JP)
(74) Representative: Nicholls, Michael John

(57) **Abstract**

A hand-off mobile communication system dispensing execution of complex processes at both base station and terminal side, and reducing interference originated when monitoring a neighboring base station. A radio communication terminal is provided comprising a receiver unit using a transmission suspending period generated as a result of the reception of compressed data frames, and yet, based on such function for measuring actual intensity of data signal from neighboring base stations using different frequencies and also, based on the measured result, controls a transmitting and/or receiving means to switch a base station transmitting and/or receiving actual data. Also, there is provide a CPU detecting that the radio terminal remains in a non-mobile condition and then transmits the data signal indicating this condition to a switched base station. In response to the data from the radio terminal notifying this condition, the base station continuously transmits radio data frames to the radio communication terminal without providing such a transmission suspending period.

## Description

The present invention relates to a communication system, a communication method, and a communication terminal apparatus. More specifically, the present invention relates to a communication system and a communication method for executing mutual communication between a plurality of base stations through hand-off communication by switching base stations, and yet, also relates to a communication terminal apparatus thereof.

In order to realize such a hand-off communication process characteristic of a mobile communication system in order to executing communication by way of switching base stations, it is required to initially measure actual signal strength transmitted from another neighboring base station and then request a hand-off process to a certain base station having higher signal strength. When dealing with such a radio accessing method utilizing multiple codes as the one called "Wide-Band Code Division Multiple Access (W-CDMA)" applied to a third-generation mobile communication system, it is necessary to measure both signal strength from a base station transmitting signal utilizing a same frequency and signal strength of a signal transmitted from another base station transmitting a signal under different frequency.

When measuring signal strength from a base station utilizing a same frequency, it is possible to measure signal strength from another neighboring base station while receiving signal from a base station with which communication is actually undergoing. On the other hand, when communicating with another base station actually transmitting signal utilizing a different frequency, insofar as frequency of received signal must be changed, it is necessary for the terminal side to provisionally suspend communication with the base station from which signal is actually received.

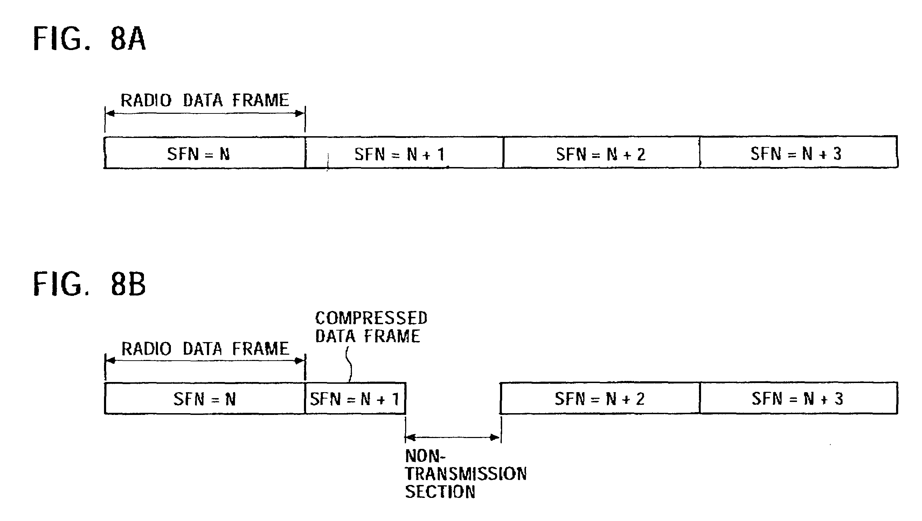

Conventionally, such a compression mode is utilized as a means for measuring signal strength from a base station using different frequency without losing data related to another base station from which signal is actually received. Referring to FIG. 8 (A) and FIG. (B), such a practical method for measuring signal strength from a base station is described below, where this method can be realized by applying the compression mode cited above.

Usually, as shown in FIG. 8 (A), in the course of transmitting data from a base station to a terminal station, radio data frame is continuously transmitted from the base station to the terminal station. When activating the compression mode, a specific radio data frame is subject to compression. Specifically, as shown in FIG. 8 (B), initially, a frame number (SFN) compresses an N+1th radio data frame, and then transmits it as a compressed frame to the terminal station. The act of compression is realized by way of initially decreasing encoded gain in the compressed radio data frame to cause data to be packed altogether, and, as a result, such a compressed data frame for allowing provisional suspension of data transmission is generated.

As a result, the terminal station enters into such a period in which data transmission is suspended for a predetermined period of time immediately after generation of the compressed data frame (hereinafter referred to as "transmission suspending period"). By way of enabling the base station to previously notify the terminal station of a specific frame number which is subject to suspension of data transmission, it is possible for the terminal station to detect generation of the transmission suspending period as a predetermined timing. As a result, by utilizing the transmission suspending period, it is possible for the terminal station to measure signal strength from the base station utilizing a different frequency. Specifically, availing of partial interval of a predetermined frame number (corresponding to the above referred SFN = N+1 in this example) in which data transmission is suspended, the terminal station measures signal strength transmitted from a base station utilizing a different frequency.

For example, such related art is disclosed as available for realizing the above-referred compression mode, which includes Third Generation Partnership Project, 3G TS25.212 Version 3.1.0 Multiplexing and Channel Coding, TS25.213 Version 3.1.0 Spreading and Modulation, TS25.214 Version 3.1.0 Physical Layer Procedures (FDD), and TS25.215 Version 3.1.0 Physical Layer Measurements (FDD).

When introducing the above compression mode, inasmuch as the encoded gain is processed on the part of the compressed data frame having a transmission suspending period via such a manner being different from that of other frames, unlike normal data processing cases, it is necessary for the terminal side to execute such a process for receiving the compressed data frame based on a reduced amount of encoded gain. Further, it is also necessary to suspend transmission from the terminal side itself. In this way, in order to realize the compression mode, complex data processing is required.

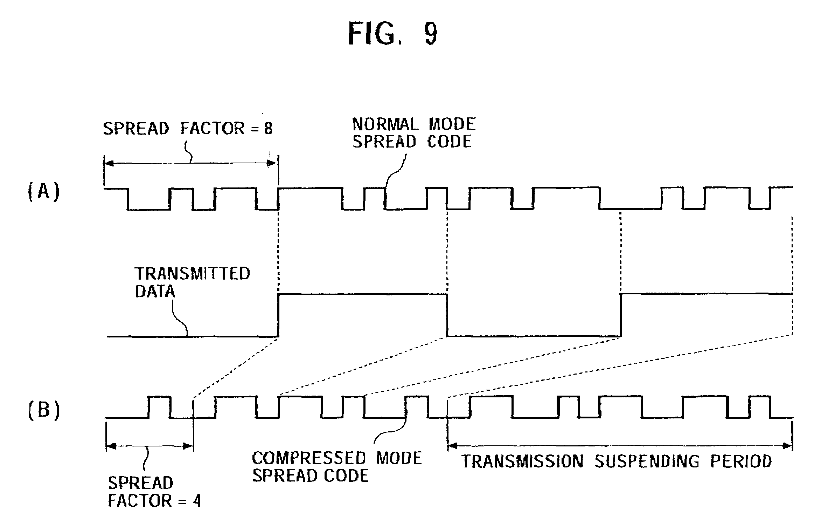

On the other hand, when generating such a frame for partially suspending transmission, the base station executes such a process for decreasing the encoded gain by way of lowering spread process gain for example. When applying the method for lowering the spread process gain, as shown in FIG. 9 (A) and FIG. 9 (B), by way of utilizing such a code bearing a certain spread factor that is one half of the normally used codes, it is possible to transmit double the data within an identical period of time.

Nevertheless, inasmuch as such a code used for the compression mode based on the above method for lowering the spread process gain is not in an orthogonal relationship to the normally used codes, such a frame under compression mode becomes a source of interference with other users. This in turn raises a critical problem in which the number of users that can be supported by the communication system become reduced.

From the above mentioned reasons, it is required to minimize such possibility of executing data transmission via the compressed data frame. In other words, it is necessary to minimize a number of retrievals to be performed by the base station executing data communication via a different frequency.

The present invention has been conceived in view of the above circumstances. It is preferable to provide a communication system, a communication method, and a communication terminal apparatus, which permits a base station and a terminal station in a mobile data communication system performing "hand-off" to avoid execution of complex data processing operations, and yet, being capable of minimizing interference that may be generated as a result of monitoring neighboring base stations.

In order to addressing the above-referred problems and providing data frames and such a period without data transmission, the inventive communication system comprises a plurality of relaying base stations for continuously transmitting compressed data frames generated by way of compressing data frames as required. Further, the inventive communication system includes:
a mobile communication terminal apparatus having: a transmitting and/or receiving means for transmitting and/or receiving actual data to/from said relaying base stations by applying a specific frequency; a signal strength measuring means for measuring signal strength of neighboring relaying base stations individually using different frequencies by applying such a period without data transmission generated as a result of the reception of a compressed data frame via said transmitting and/or receiving means; a controlling means for controlling frequencies transmitted and received by said transmitting and/or receiving means based on the measurement result determined by said signal strength measuring means and then switches relaying base stations respectively transmitting and/or receiving actual data; a detecting means for detecting that the communication terminal apparatus remains in a approximately non-mobile condition; and a non-mobile condition information transmitting means for transmitting via said transmitting and/or receiving means such a data for indicating the approximately non-mobile condition of the communication terminal apparatus detected by said detecting means to relaying base stations individually transmitting and/or receiving actual data.

According to such preferred embodiment of the communication system of the present invention, based on the data for indicating the approximately non-mobile condition transmitted from a communication terminal apparatus, each of the relaying base stations continuously transmits data frames without providing such a period without data transmission.

In the inventive communication system comprising the above construction, the communication terminal apparatus transmits via the above transmitting and/or receiving means such a data indicating the approximately non-mobile condition of the communication terminal apparatus detected by the detecting means to each of the relaying base stations individually transmitting and/or receiving actual data. Based on the data indicating the approximately non-mobile condition received from the communication terminal apparatus, each of the relaying base stations continuously transmits data frames without providing such a period without data transmission.

Because of the above arrangement, when the inventive communication terminal apparatus remains in approximately non-mobile condition, each of the relaying base stations transmits data to the communication terminal apparatus by applying such a data frame without having such a period without data transmission. On the other hand, the communication terminal apparatus receives data transmitted from each of the relaying base stations without activating the above-referred signal strength measuring means and controlling means.

In order to alleviate the above problems, the inventive communication method executes those serial processing steps including the following:
a transmitting step which, in order to provide such a period without data transmission, continuously transmits data frames and compressed data frames generated as a result of the compression of data frames as required from each of the relaying base stations;
a signal strength measuring step which, availing of such a period without data transmission generated as a result of the reception of the compressed data frames via the above-referred transmitting and/or receiving means for transmitting and/or receiving actual data to and from the relaying base stations by applying a specific frequency, measures signal strength of neighboring relaying base stations utilizing different frequencies via the communication terminal apparatus; and
a base-station selecting step which, based on the measurement result determined via the signal strength measuring step, controls frequency of data signal transmitted and received by the transmitting and/or receiving means of the communication terminal apparatus and then switches the relaying base stations which individually transmit and receive actual data.

On the other hand, the communication terminal apparatus detects that the communication terminal apparatus itself remains in approximately non-mobile condition, and then transmits via the above transmitting and/or receiving means such a detected data for indicating the approximately non-mobile condition of the communication terminal apparatus to each of the relaying base stations which individually transmits and receives actual data. On receipt of the data for indicating the approximately non-mobile condition of the communication terminal apparatus from this terminal apparatus, each of the relaying base stations continuously transmits the data frames in the transmitting step without providing such a period without data transmission.

As a result of the above arrangement, while the communication terminal apparatus remains in the approximately non-mobile condition, each of the relaying base stations transmits data to the communication terminal apparatus by applying the data frame without having such a period without data transmission. On the other hand, the communication terminal apparatus receives data transmitted from each of the relaying base stations without activating the signal strength measuring means and the controlling means into operation.

Further, in order to provide such a period without data transmission, the inventive communication terminal apparatus transmits and receives data to and from one of the base stations among a plurality of relaying base stations continuously transmitting data frames and compressed data frames generated as a result of the compression of data frames as required. The communication terminal apparatus includes the following:
a transmitting and/or receiving means for transmitting and/or receiving actual data to and from one of the relaying base stations by applying a specific frequency;
a signal strength measuring means which, availing of such a period without data transmission generated as a result of the reception of the compressed data frame from the transmitting and/or receiving means, measures signal strength of neighboring relaying base stations utilizing different frequencies;
a controlling means for controlling frequency of data signal transmitted and received by the transmitting and/or receiving means based on the measurement result determined by the signal strength measuring means and then switches the relaying base stations which individually transmit and receive actual data;
a detecting means for detecting that the communication terminal apparatus remains in approximately non-mobile condition;
a non-mobile condition information transmitting means for transmitting via the transmitting and/or receiving means such a data for indicating the approximately non-mobile condition of the communication terminal apparatus detected by the detecting means to the relaying base stations which individually transmit and receive actual data.

Based on the received data for indicating the approximately non mobile condition of the communication terminal apparatus, each of the relaying base stations continuously transmits data frames without providing such a period without data transmission.

The communication terminal apparatus characterized by the above construction transmits via the transmitting and/or receiving means such a data for indicating the approximately non-mobile condition of its own detected by the detecting means to the corresponding relaying base stations which individually transmit and receive actual data. Based on the data from the communication terminal apparatus notifying of its own approximately non-mobile condition, the corresponding relaying base stations continuously transmit data frames without providing such a period without data transmission.

As a result of the above arrangement, while the communication terminal apparatus remains in approximately non-mobile condition, the corresponding relaying base stations transmits data to the communication terminal apparatus by applying such a data frame without having such a period without data transmission. On the other hand, the communication terminal apparatus receives data transmitted from the relaying base stations without activating the signal strength measuring means and the controlling means into operation.

According to a communication system according to another embodiment of the present invention, in response to the data for indicating an approximately non-mobile condition transmitted from the communication terminal apparatus, each of the relaying base stations continuously transmits data frames without providing such a period without data transmission.

The communication terminal apparatus transmits via the transmitting and/or receiving means such a data for indicating the approximately non-mobile condition detected by the detecting means to each of the relaying base stations which individually transmit and receive actual data. In response to the data for indicating the approximately non-mobile condition received from the transmitting and/or receiving means, each of the relaying base stations continuously transmits data frames without providing such a period without data transmission. By virtue of this arrangement, while the communication terminal apparatus remains in the approximately non-mobile condition, each of the relaying base stations transmits data to the communication terminal apparatus by applying such data frames without having such a period without data transmission. On the other hand, the communication terminal apparatus receives data transmitted from the relaying base stations without activating the signal strength measuring means and the controlling means into operation.

The communication terminal apparatus detects that the communication terminal apparatus itself remains in approximately non-mobile (fixed, stationary or the like) condition, and then transmits via the transmitting and/or receiving means such data for indicating that the communication terminal apparatus remains in approximately non-mobile condition to the relaying base stations which individually transmit and receive actual data. In response to the data for indicating the above approximately non-mobile condition received from the communication terminal apparatus, the relaying base stations continuously transmit data frames without providing such a period devoid of transmission during the transmitting process.

While the communication terminal apparatus remains in approximately non-mobile condition, each of the relaying base stations is enabled to transmit data to the communication terminal apparatus by applying such a data frame without having such a period without data transmission. On the other hand, it is possible for the communication terminal apparatus to receive data signal transmitted from a relaying base station without necessarily activating the signal strength measuring means and the controlling means into operation.

Upon receiving the data for indicating that the communication terminal apparatus remains in an approximately non-mobile condition, each of the relaying stations continuously transmits data frames without providing such srperiod without data transmission.

The communication terminal apparatus transmits via the transmitting and/or receiving means such a data notifying the approximately non-mobile condition detected by the detecting means to each of the relaying base stations which individually transmit and receive actual data. Based on the data for indicating the approximately non-mobile condition transmitted from the communication terminal apparatus, each of the relaying base stations continuously transmits data frames without providing such a period without data transmission. As a result, while the communication terminal apparatus remains in the approximately non-mobile condition, it is possible for each of the relying base stations to transmit data signal to the communication terminal apparatus by applying such a data frame without having such a period without data transmission. On the other hand, it is possible for the communication terminal apparatus to receive data signal from the relaying base stations without activating the signal strength measuring means and the controlling means into operation.

The foregoing and other features and advantages of the present invention will be apparent to those skilled in the art from the following description of the presently preferred exemplary embodiments of the invention taken in conjunction with the accompanying drawings, in which:
FIG. 1 designates a simplified schematic block diagram of a radio communication system according to a preferred embodiment of the present invention;
FIG. 2 designates a chart describing a generally available data processing sequence according to a preferred embodiment of the present invention;
FIG. 3 designates a schematic chart describing a processing sequence when applicability and inapplicability of the compression mode on the part of a base station is controlled via operation of a radio terminal apparatus in the communication system shown in FIG. 1 according to a preferred embodiment of the present invention;
FIG. 4 designates a chart describing a retrieval requesting data added to the contents of-data related to a request for call settings and conditions executed by the radio terminal apparatus against the base station according to a preferred embodiment of the present invention;
FIG. 5 designates a simplified schematic block diagram of another radio terminal apparatus of the radio communication system according to another preferred embodiment of the present invention;
FIG. 6 designates a front view of an exemplified case in which a radio terminal apparatus is loaded in a station of a personal computer according to a preferred embodiment of the present invention;
FIG. 7 designates a chart describing a processing sequence when applicability and inapplicability of the compression mode of the base station is subject to control depending on the loading of the radio communication apparatus onto the station of a personal computer and the absence thereof in the radio communication system shown above according to a preferred embodiment of the present invention;
FIG. 8 (A) and FIG. 8 (B) designate diagrams respectively exemplifying the case in which compressed data frames are generated via the compression mode; and
FIG. 9 (A) and FIG. 9 (B) designate charts for exemplifying a means for lowering spread process gain in order to decrease coded gain in the compression mode.

Referring to the accompanying drawings, preferred embodiments for embodying the present invention are described below. One of the preferred embodiments of the present invention includes a radio communication system for executing radio communication between a radio communication terminal apparatus and a base station, where the radio communication means includes a portable telephone set or a data communication system, for example.

The radio communication system according to the preferred embodiment of the present invention introduces such a radio accessing system utilizing such a multiple coding format as the one called "Wide-band Code Division Multiple Access (W-CDMA)" for example. It is so arranged that the radio terminal apparatus measures both an actual signal strength from a base station transmitting signal waves with a same frequency and another signal strength from a base station transmitting signal waves under a different frequency.

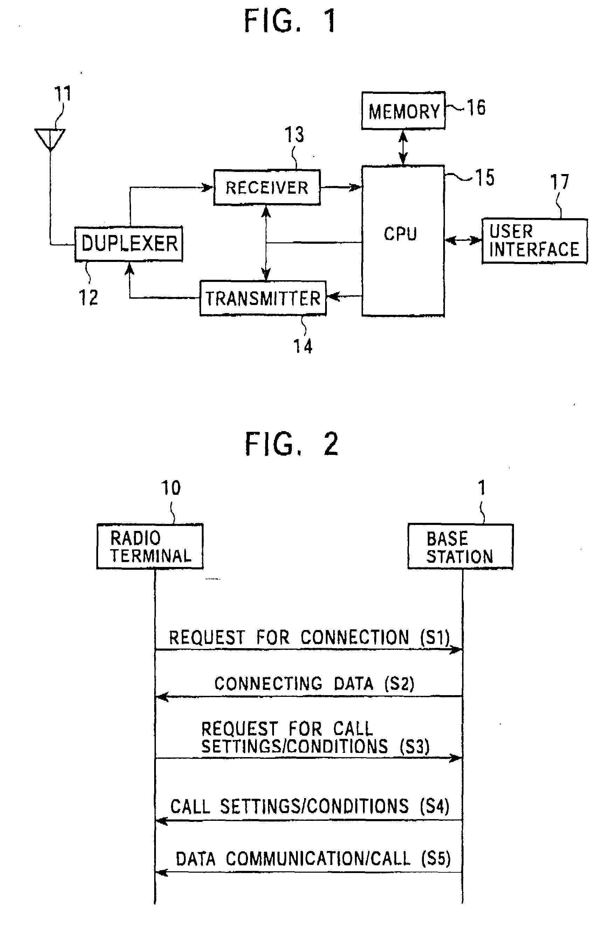

FIG. 1 schematically exemplifies construction of a radio terminal apparatus 10. As shown here, the radio terminal apparatus 10 comprises a transmission and/or reception antenna 11, a signal duplexer 12, a receiver 13, a transmitter 14, a CPU 15, a memory 16, and a user interface 17.

In the radio terminal apparatus 10 comprising the above components, the antenna 11, the signal duplexer 12, the receiver 13, and the transmitter 14 jointly function as a transmitting and/or receiving means for transmitting and/or receiving actual data to and from a base station by applying an identical frequency.

Using such a period without data transmission (period devoid of transmission of data) generated as a result of the reception of a compressed data frame via the above referred transmitting and/or receiving means and also based on a function as a signal strength measuring means for measuring actual signal strength from a neighboring base station (not shown) bearing a different frequency and also based on the measurement result determined via the function of the signal strength measuring means, the receiver 13 controls the above transmitting and/or receiving means, and yet, it also functions as a controlling means for switching individual base stations for transmitting and/or receiving actual data. The CPU 15 functions itself as a detecting means for detecting an approximately non-mobile condition of the radio terminal apparatus, i. e., a condition in which the radio terminal apparatus can be considered stationary, and also functions itself as a means for transmitting via the above tranemitting and/or receiving means such data detected as non-mobile condition of the radio terminal apparatus to a specific base station which transmits and receives actual data.

In the radio terminal apparatus10, the user interface 17 constitutes an operating means for performing an external input of data. Based on the external input operation performed by the user interface 17, the CPU 15 detects such a data indicating that the radio terminal apparatus 10 remains in the approximately non-mobile condition. For example, the user interface 17 incorporates such an input port for exclusively receiving such a data for indicating that the radio terminal apparatus 10 remains in the non-mobile condition. By way of detecting this input data, the CPU 15 acquires the data for indicating that the radio terminal apparatus 10 remains in the non-mobile condition.

On the other hand, in the radio communication system shown in FIG. 8 (A) and FIG. 8 (B), such a base station (not shown) corresponds to a relaying base station which causes a compressed data frame generated by compression of a radio data frame as required to be transmitted continuously in order to provide a radio data frame and such a period without data transmission. Based on the data from the radio terminal apparatus 10 notifying of the approximately non-mobile condition of the radio terminal apparatus itself, the above base station continuously transmits such radio data frames devoid of compressed data frames without providing such a period without data transmission.

Referring now to a processing sequence shown in FIG. 2, serial steps for executing general processes via the radio communication system are described below.

Initially, step S1 is entered in which, when a call request is generated while the radio terminal apparatus 10 remains in the standby mode, the CPU 15 generates a request for connection. Usually, this request is transmitted to a corresponding base station 1 via a common channel. Next, step S2 is entered, in which, based on the request for connection (connecting data), the corresponding base station 1 in receipt of the request for connection assigns a certain channel available for the call to the radio terminal apparatus 10. Next, step S3 is entered, in which, based on the such information, the radio terminal apparatus 10 switches available channel from the common channel to an individual channel, and then starts data transmission via the individual channel. Based on a request for call settings (settings for a call) and conditions, the radio terminal apparatus 10 generates a request for receiving desired service (such as audio, data, packet, or the like) and setting of communication speed. Next, step S4 is entered, in which, based on the call settings and condition settings, the corresponding base station 1 determines actually usable setting and condition for the call, and then, based on the request for call settings and conditions, the corresponding base station 1 transmits an instruction to the radio terminal apparatus 10. Next, step S5 is entered, in which, in compliance with the contents of the setting of the call and related condition, the corresponding base station 1 and the radio terminal apparatus 10 individually start up data communication or a call.

In such a case in which a compressed data frame generated via the compression mode is transmitted from the corresponding base station 1, by way of utilizing the compressed data frame, the radio terminal apparatus 10 measures signal strength from other base stations, and then, depending on cases, communicating destination is switched over to another base station to further execute transmission and/or reception of data.

By way of following up the above-referred processing sequence, communication via the radio communication system is established to effectuate intended data communication or call. The radio terminal apparatus 10 executes those processing steps including the following.

After reception of data via the transmitting and/or receiving antenna 11 followed by passage through the signal duplexer 12, the receiver 13 transmits this data to the CPU 15. Further, the receiver 13 measures actual signal strength received via the antenna 11 and transmitted from a corresponding base station (not shown) under actual communication and also measures intensity of another signal transmitted from another neighboring base station (not shown). More specifically, in response to the instruction from the CPU 15, the receiver 13 deals with the compressed mode, executes switching of frequencies of the received signal, and measures signal strength transmitted from neighboring base stations.

The compressed mode processing operation processes such a compressed data frame transmitted from a corresponding base station based on a predetermined timing. When such a method based on the compressed mode is introduced as to measure signal strength, as mentioned above, such a process is executed in order that the coded gain will differ from that of other frames. As a result, such a compressed data frame incorporating such a signal suspending period considered as a period without data transmission is generated. As a result, in order to effect the compressed mode processing operation, the radio terminal apparatus 10 executes a data receiving process against the compressed data frame based on such a coded gain different from that is generated via normal processing methods.

The process for switching frequencies of received data signal designates such a process for switching the actually receiving frequency over to another frequency for the sake of measuring actual intensity of the signal transmitted from neighboring base stations using different frequencies by way of utilizing the transmission suspending period that follows the compressed data frame. Measurement of the signal strength transmitted from neighboring base stations is executed by way of measuring signal strength transmitted from neighboring base stations by applying a different frequency matching that of the neighboring base stations as a result of the switching of the frequency of received data signal.

When data signal based on the compressed mode is transmitted from a corresponding base station 1, the radio terminal apparatus 10 is enabled to execute the above-described processes. Specifically, these processes are activated into execution simultaneous with the timing at which data of a frame number (SFN) for suspending data transmission from the corresponding base station 1 is received. For example, these processes are activated into execution at a specific timing based on the instruction from the CPU 15. In other words, the radio terminal apparatus 10 does not execute the above processes insofar as no data of such a frame number for suspending transmission of data signal is received.

Data signal is transmitted to the corresponding base station 1 via the signal duplexer 12 after converting the data generated by the CPU 15 into radio signal via the transmitter 14. The user interface 17 comprises an operating unit such as a key-pad or a jog dial, which enables user to input desired instruction via manual operation. Specifically, user is enabled to operate the radio terminal apparatus 10 via operation of the user interface 17. User's instruction input via the user interface 17 is stored in the memory 16 via the CPU 15.

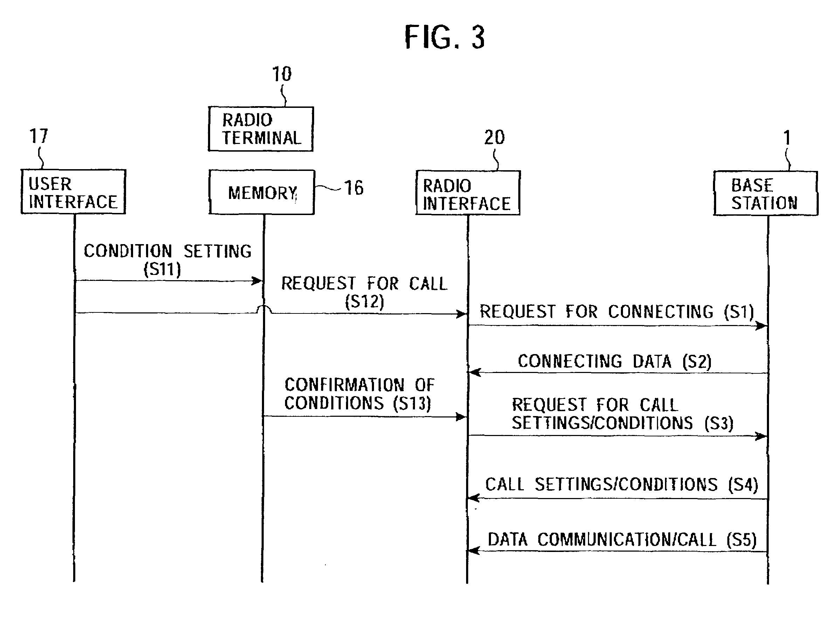

It is possible for the radio communication system to control data transmission based on the compressed mode executed by the corresponding base station 1 via the above processes executed by the radio terminal apparatus 10. Specifically, the radio communication system enables the radio terminal apparatus 10 to determine applicability and inapplicability of the compressed mode on the part of the corresponding base station 1. This process is described below by referring to the operating flowchart of the radio communication system shown in FIG. 3.

Initially, step S11 is present, in which, when user of the radio terminal apparatus 10 judges that he/she can use the radio terminal apparatus 10 as of the fixed (or, non-mobile) condition, then, he/she can input this condition by way of operating the user interface 17. For example, inasmuch as the user interface 17 allows display of menu contents on a display screen, user can set the corresponding condition by operating a menu screen. Data entered via the user interface is stored in the memory 16 as an established condition.

Thenceforth, when a request for effecting a call is generated by user, step S12 is entered. In response, the radio terminal apparatus 10 transmits a connection request to the corresponding base station 1 via a radio interface 20, thus returning to step S1. The radio interface 20 includes a transmitting and/or receiving antenna 11, a signal duplexer 12, a receiver 13, and a transmitter 14, for example. Normally, the connection request is transmitted to the corresponding base station 1 via a common channel.

Next, step S2 is entered, in which, upon receipt of the connection request, the corresponding base station 1 notifies the radio terminal apparatus 10 of a radio channel usable for effecting a call via a connection data. Upon receipt of the connection data via the radio interface 20, based on the received connection data, the radio terminal apparatus 10 effects a switching operation to set a call channel to start off transmission and/or reception of data.

Next, step S3 is entered, in which, in order to confirm the established condition, the radio terminal apparatus 10 refers to the contents of the request for call settings and conditions via the memory 16, and then, transmits the contents of the call settings and conditions. Transmissible contents of the request for call settings and conditions includes the following: normal service contents such as audio, data, packet, communication speed, and such retrieval-requesting data for indicating whether it is required to retrieve such neighboring base station using different frequencies or not.

The retrieval requesting data comprises such a data which reports that no retrieval action is required solely in such a case in which the radio terminal apparatus 10 is operable in the fixed condition as per the condition established while the above step S11 is underway.

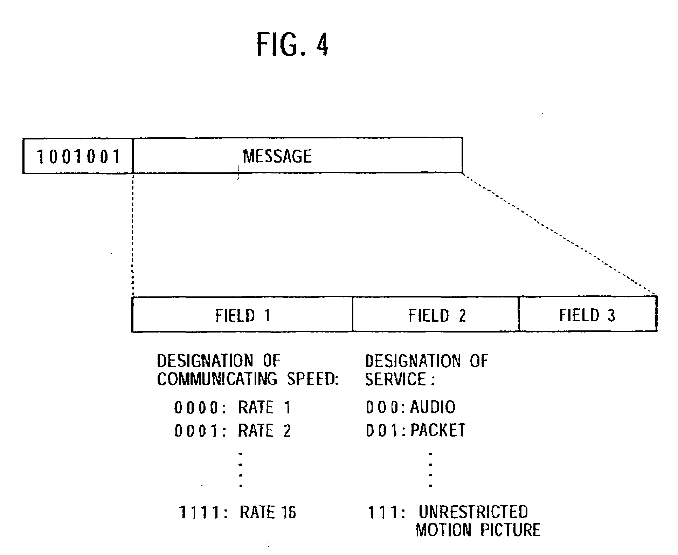

As shown in FIG. 4, conventionally, such data for indicating the request for call settings and conditions to be transmitted from the radio terminal apparatus 10 to the corresponding base station 1 includes a field 1 having data related to the designation of communication speed and a field 2 comprising data for indicating contents of service. By way of adding another field 3 available for designating the retrieval requesting data, it is possible to transmit the retrieval requesting data from the radio terminal apparatus 10 to the corresponding base station 1. For example, by arranging that the contents of the retrieval. requesting data is expressed by applying 1-bit, it is determined that "0" designates a normal processing routine requiring retrieval action, whereas "1" designates such a processing routine that does not require retrieval action.

The above arrangement makes it possible to transmit the retrieval requesting data from the radio terminal apparatus 10 to the corresponding base station 1 merely by way of expanding (in other words, by way of applying 1 bit of the field 3) such a conventional data (i.e., message) for indicating request for the call setting and conditions. As a result, it is possible to realize the above-described function without adding any new message.

When step S4 is entered, in compliance with the data for indicating the request for call settings and conditions transmitted from the radio terminal apparatus 10, the corresponding base station 1 determines a practically applicable call channel, and then notifies the radio terminal apparatus 10 of the determined contents as per the established call condition. Only after properly executing the above processes, step S5 is entered to initiate the data transmission.

In the event of a request for retrieval action being generated as a normal processing routine based on the retrieval requesting data on the way of processing the request for call settings and conditions, by applying the compressed mode, the corresponding base station 1 generates compressed data frames at a predetermined timing. On the other hand, using the transmission suspending period arising via transmission of the compressed data frames from the corresponding base station 1, the radio terminal apparatus 10 measures actual intensity of the data signal transmitted from neighboring base stations. Depending on cases, the radio terminal apparatus 10 executes transmission and/or reception of data signal by way of switching over to the communication with the neighboring base stations.

In the course of executing the above serial processes, the retrieval requesting data is transmitted from the radio terminal apparatus 10 to the corresponding base station 1. Then, in response to the received retrieval requesting data, the corresponding base station 1 retrieves neighboring base stations utilizing different frequencies. In other words, in the radio communication system, the radio terminal apparatus 10 can properly control data transmission based on the compressed mode being executed by the corresponding base station 1.

Owing to the above arrangement, while operating the radio terminal apparatus 10 in the non-mobile condition, the radio terminal apparatus 10 can be so arranged that it will not retrieve neighboring base stations which utilize different frequencies. In other words, when user operates the radio terminal apparatus 10 on the way of walking or by way of connecting it to a personal computer as of the fixed (non-mobile) condition, it is possible to arrange that the compressed mode cannot be activated in the radio terminal apparatus 10. This in turn causes monitoring of neighboring base stations individually utilizing different frequencies to be suspended, thus making the radio terminal apparatus 10 to be operable under normal operating mode.

Accordingly, in the above case, the radio communication system dispenses such serial processes otherwise required for the corresponding base station 1 and the radio terminal apparatus 10 for the sake of retrieving neighboring base stations, thus resulting in the decreased burden imposed on the whole radio communication system, and yet, making it possible to increase potential capacity of the radio communication system. Further, inasmuch it is possible to lessen chance for transmitting data signal under compressed mode, it is also possible to suppress generating frequency of the compressed data frames which are apt to generate interference with other users. For example, because of the above reason, it is possible to prevent the number of users supposed to be accommodated in the radio communication system from being decreased.

Next, a preferred embodiment is described below for a radio communication system capable of realizing the above-described function by effect of securing the radio terminal apparatus 10 to a docking station.

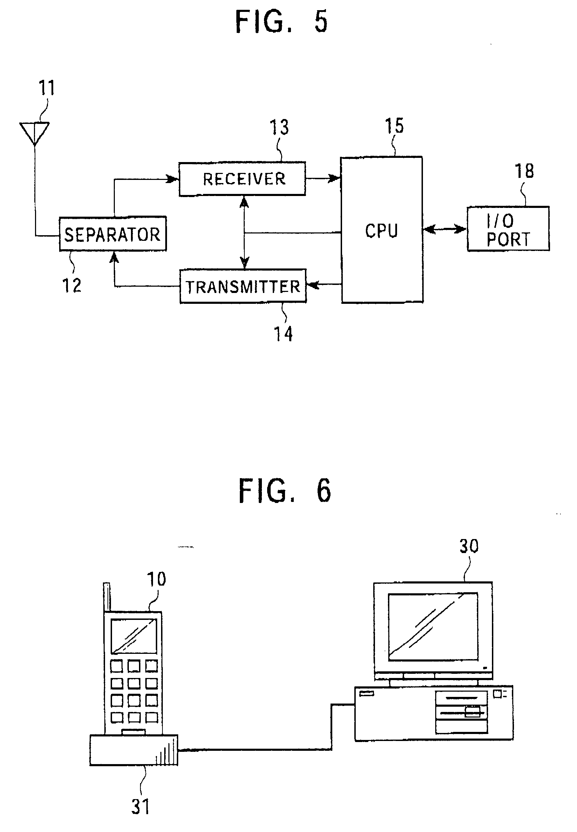

As shown in FIG. 5, a radio terminal apparatus 10 sharing part of the radio communication system under the second preferred embodiment of the present invention incorporates an input and output (I/O) port 18. Owing to this arrangement, the radio terminal apparatus 10 automatically detects that the radio terminal apparatus 10 itself is connected to a stationary external terminal apparatus such as a personal computer or the like. When a call is generated while being connected to the stationary (fixed) external terminal apparatus, the radio terminal apparatus 10 requests a corresponding base station not to apply the compressed mode thereto.

FIG. 6 exemplifies a simplified construction of a station unit 31 which is connected to a stationary external terminal apparatus comprising a desk-top-type personal computer 30, where the radio terminal apparatus 10 is loaded on the station 31. The station unit 31 is detachable from the radio terminal apparatus 10.

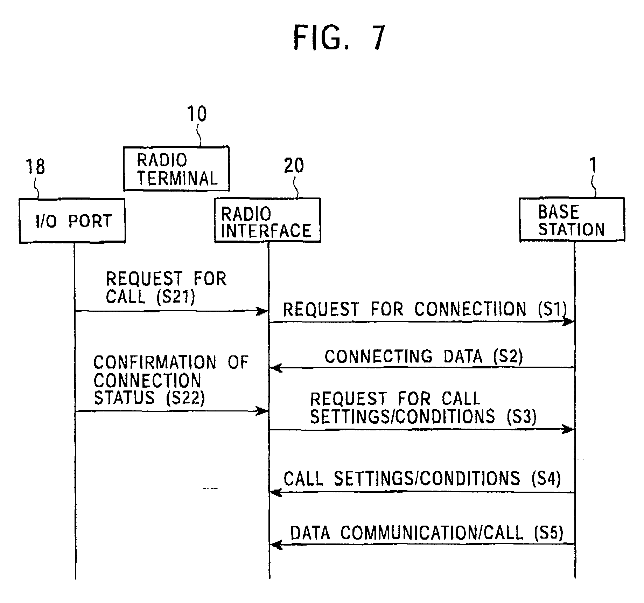

As a result of the connection of the radio terminal apparatus 10 to the station unit 31, it is possible for the personal computer 30 to be wireless connected to the radio communication system via the radio terminal apparatus 10. In this case, data signal is exchanged between the personal computer 30 and the station unit 31 via the I/O port of the radio terminal apparatus 10, The CPU 15 built in the radio terminal apparatus 10 detects whether the I/O port is connected to the station unit 30 or not. As a result, it is possible for the radio terminal apparatus 10 to control the compressed mode on the part of the corresponding base station 1. This operation is described below by referring to the flowchart of the serial operations of the radio communication system shown in FIG. 7. Basically, the flowchart shown in FIG. 7 is analogous to the one shown in FIG. 3 except for the difference described below.

Before enabling the radio terminal apparatus 10 to transmit data for requesting establishment of communication and related condition (this corresponds to step S2), the CPU 15 confirms the connection condition of the I/O port 18 (this corresponds to step S22). After confirming that the I/O port 18 is connected to the station unit 31, the radio terminal apparatus 10 transmits the required retrieval requesting data to the corresponding base station 1 via a radio interface 20. In response to the request for making a call from the I/O port 18, the radio terminal apparatus 10 starts a call (this corresponds to step S21).

While undergoing the above processing sequence, the radio terminal apparatus 10 outputs such a retrieval requesting data corresponding to the actual condition of the connection of the radio terminal apparatus with the station unit 31 for transmission to the corresponding base station 1. In response to the received retrieval requesting data, the corresponding base station 1 retrieves neighboring base stations individually utilizing different frequencies. Specifically, it is possible for the radio communication system to control applicability and inapplicability of the compressed mode executed on the part of the corresponding base station 1 via the radio terminal apparatus 10.

Because of the above arrangement, when the radio terminal apparatus 10 is loaded on the station unit 31, based on assumption that the mobility of the radio terminal apparatus 10 is restricted, it is possible to enable the CPU 15 to automatically identify that the radio terminal apparatus 10 itself remains fixed whereby freeing the radio terminal apparatus 10 from retrieving neighboring base stations using different frequencies. In this case, the corresponding base station 1 and the radio terminal apparatus 10 are respectively dispensed with such processes otherwise required for retrieving neighboring base stations. This in turn lessens total burden imposed on the radio communication system whereby making it possible to increase potential capacity of the radio communication system.

Further, it is possible to decrease chance for transmitting data signal under the compressed mode. This in turn minimizes generating frequency of the compressed data frames that may generate interference with other users. For example, as a result, it is possible to prevent reduction of the number of users to be accommodated in the radio communication system.

Finally, as the configurations and structures of respective units and portions described specifically with respect to the preferred embodiments of the present invention are only examples of realization of the present invention, so the embodiments thereof should not be construed as to limiting the technical scope of the present invention, the present invention is not limited to the preferred embodiments described above, thus any variation as well as any combination and/or sub combination of the embodiments is permitted, without departing from the scope of the present invention.

## Claims

1. A communication system comprising:
a plurality of relaying base stations continuously transmitting a data frame and a compressed data frame, the compressed data frame generated as a result of compressing said data frame as required for providing a period without data transmission; and
a mobile communication terminal comprising:
a transmitting and/or receiving means for transmitting and/or receiving actual data to/from said relaying base stations under a specific frequency;
a signal strength measuring means for measuring intensity of data signal transmitted from a relaying base station having a different frequency, by utilizing said period without data transmission generated by reception of said compressed data frames via said transmitting and/or receiving means;
a controlling means controlling frequency of data signal transmitted and received by said transmitting and/or receiving means based on a result of measurement by said signal strength measuring means, and then switching a relaying base station transmitting and/or receiving actual data;
a detecting means for detecting that said mobile communication terminal is in an approximately non-mobile condition; and
a non-mobile condition information transmitting means for transmitting via said transmitting and/or receiving means information on the approximately non-mobile condition detected by said detecting means to a relaying base station transmitting and/or receiving actual data; wherein
said relaying base station continuously transmits a data frame without providing said period without data transmission, based on the information on the approximately non-mobile condition from said mobile communication terminal.

2. The communication system according to Claim 1, wherein each of said plurality of relaying base stations generates said compressed data frame from said data frame under a compressed mode.

3. The communication system according to Claim 1 or 2, wherein said non-mobile condition information transmitting means transmits information on the approximately non-mobile condition to said relaying base stations before starting transmission and/or reception of actual data.

4. The communication system according to any one of the preceding claims, further comprising an operating means for inputting external information on the approximately non-mobile condition, wherein said detecting means detects input of information on the approximately non-mobile condition, the input performed through said operating means.

5. The communication system according to any one of the preceding claims, wherein said detecting means detects a the approximately non-mobile condition by detecting that said communication terminal is loaded onto a fixing apparatus.

6. The communication system according to Claim 5, wherein said fixing apparatus comprises a station unit connected to a computer and transfers data between said loaded communication terminal and said computer, wherein said communication terminal can be freely attached/detached to/from said fixing apparatus.

7. The communication system according to any one of the preceding claims, wherein said communication terminal comprises a portable telephone set and said actual data comprises telephone call data.

8. A communication method comprising;
a transmitting step for continuously transmitting from a relaying base station a data frame and a compressed data frame generated by compressing said data frame as required for providing a period without data transmission;
a signal strength measuring step for measuring intensity of data signal transmitted from a relaying base station having a different frequency, by utilizing said period without data transmission generated by reception of said compressed data frame via a transmitting and/or receiving means transmitting and receiving actual data to/from relaying base stations under a specific frequency; and
a base-station selecting step for controlling frequency of transmission and reception of said transmitting and/or receiving means of said communication terminal based on a measurement result of said signal strength measurement step and switching a relaying base station transmitting and/or receiving actual data; wherein
said communication terminal detects whether said communication terminal is on approximately non-mobile condition, and then transmits via said transmitting and/or receiving means information on said detected approximately non-mobile condition to said relaying base station transmitting and/or receiving actual data; and
said relaying base station continuously transmits data frames without providing said period without data transmission during said transmitting step, based on said information on the approximately non-mobile condition transmitted from said communication terminal.

9. A communication terminal transmitting and/or receiving data signal to and to/from a relaying base station from a plurality of relaying base stations, said relaying base station continuously transmitting a data frame and compressed data frame generated by compressing said data fame as required for providing a period without data transmission, the communication terminal comprising:
a transmitting and/or receiving means for transmitting and/or receiving actual data to and from said relaying base station under a specific frequency;
a signal strength measuring means for measuring strength of data signal from a neighboring relaying base station using a different frequency by utilizing said period without data transmission generated as a result of reception of said compressed data frame via said transmitting and/or receiving means;
a controlling means for controlling frequency of data signal from said transmitting and/or receiving means based on measurement result of said signal strength measuring means and switching relaying a base station transmitting and/or receiving actual data;
a detecting means for detecting an approximately mn-mobile condition; and
a non-mobile condition information transmitting means transmitting via said transmitting and/or receiving means information on the approximately non-mobile condition detected by said detecting means to said relaying base transmitting and/or receiving actual data; wherein
said relaying base station continuously transmits data frame without providing said period without data transmission, based on received information on the approximately non-mobile condition.

10. The communication terminal according to Claim 9, wherein said switched relaying base station generates said compressed data frame from said data frame by applying a compressed mode.

11. The communication terminal according to Claim 9 or 10, wherein said non-mobile condition information transmitting means transmits said information on the approximately non-mobile condition before starting transmission and/or reception of actual data.

12. The communication system according to any one of claims 9 to 11, further comprising an operating means for inputting external information on the approximately non-mobile condition, wherein said detecting means detects input of information on the approximately non-mobile condition, the input performed through said operating means

13. The communication system according to any one of claims 9 to 12, wherein said detecting means detects an approximately non-mobile condition by detecting that said communication terminal is loaded onto a fixing apparatus.

14. The communication system according to Claim 13, wherein said fixing apparatus comprises a station unit connected to a computer and transfers data between said loaded communication terminal and said computer, wherein said communication terminal can be freely attached/detached to/from said fixing apparatus.

15. The communication terminal according to any one of claims 9 to 14, wherein said communication terminal comprises a portable telephone set and said actual data comprises telephone call data.
